# EUROPÄISCHE PATENTANMELDUNG

(11) **EP 2 829 343 A1**
(43) Veröffentlichungstag der Anmeldung: **28.01.2015**
(21) Anmeldenummer: 14178099.9
(22) Anmeldetag: 23.07.2014
(51) Int. Cl.: B23D 63/16, B23D 63/14, B23D 63/00

(54) **Schärfgerät zum Schärfen von Sägeketten und Sägeblättern**

(30) Priorität: 23.07.2013 DE 202013006591 U
(71) Anmelder: Güde GmbH & Co. KG, 74549 Wolpertshausen (DE)
(72) Erfinder: Bürkle, Joachim, 74549 Wolpertshausen (DE)
(74) Vertreter: Misselhorn, Hein-Martin

(57) **Zusammenfassung**

Schärfgerät zum Schärfen von Sägeketten und Sägeblättern mit einem Grundrahmen (3), einem Motor (41), der eine Schleifscheibe (42) antreibt und einem Schwenkarm (29), an dem der Motor (41) mit der Schleifscheibe (42) schwenkbar angelenkt ist, wobei an dem Grundrahmen (3) eine erste Aufspanneinrichtung (5) zum Aufspannen einer zu schärfenden Sägekette und eine zweite Aufspannvorrichtung (16) zum Aufspannen eines zu schärfenden Sägeblatts gleichzeitig befestigbar sind und dass der Schwenkarm (29) - ohne ihn auszuwechseln - derart einstellbar ist, dass der Motor (41) in einer ersten Position zum Schleifen einer Sägekette schwenkbar festgesetzt werden kann und in einer zweiten, von der ersten Position unterschiedlichen Position zum Schleifen eines Sägeblatts.

## Beschreibung

Die Erfindung betrifft ein kombiniertes Schärfgerät, nach dem Oberbegriff des Anspruchs 1, das so beschaffen ist, dass es sowohl zum Schärfen für Sägeketten von Kettensägen, als auch zum Schärfen für Sägeblätter von Kreissägen verwendet werden kann.

Im Regelfall werden in der Praxis bis heute unterschiedliche Geräte zum Schleifen von Sägeketten und von Sägeblättern verwendet.

Ein in der Praxis bekannt gewordenes Gerät, mit dem sowohl Sägeblätter, als auch Sägeketten geschärft werden können, ist das unter der Bezeichnung "Universal-Schärfgerät USM" vertriebene Gerät der Firma Stiehl. Mit diesem Gerät können tatsächlich sowohl Sägeketten, als auch Kreissägeblätter geschliffen werden. Allerdings muss das Gerät hierfür aufwendig hin und her umgerüstet werden, denn zum Schleifen von Sägeketten wird ein anderer Schwenkarm benötigt, als zum Schleifen von Kreissägeblättern. Dies leuchtet auch ein, denn zum korrekten Anschleifen muss die Schleifscheibe an eine stehende Sägekette anders herangeführt werden, als an ein horizontal liegendes Kreissägeblatt. Unter einer stehenden Sägekette wird dabei eine Sägekette verstanden, die so auf die Schleifvorrichtung aufmontiert ist, wie sie normalerweise auch auf dem Schwert der Kettensäge läuft, nämlich so, dass die Sägekette in einer im Wesentlichen vertikalen Ebene umläuft.

Der für das Schärfen Verantwortliche muss dann bei dem USM-Gerät, um komplett gerüstet zu sein, jeweils einen Koffer mitführen, in dem sich das Schärfgerät befindet und der zusätzliche Schwenkarm. Nur dann ist gewährleistet, dass das Gerät immer in vollem Umfang einsatzbereit ist. Denn der Austausch eines Schwenkarms gegen einen anderen Schwenkarm ist zeitraubend und zudem ausgesprochen unpraktisch, zumal die Schärfgeräte im professionellen Bereich, wo eine ganze Kampagne lang mit der Motorsäge gearbeitet werden muss, nicht selten im mobilen Einsatz eingesetzt werden.

Es ist die Aufgabe der Erfindung, ein Schärfgerät anzugeben, mit dem sowohl Sägeketten, als auch Sägeblätter geschliffen werden können, ohne dass ein Teil des Geräts gegen ein anderes Teil des Geräts ausgetauscht werden muss.

Die Lösung dieser Aufgabe erfolgt mit den Merkmalen des Anspruchs 1.

Erfindungsgemäß wird ein Schärfgerät zum Schärfen von Sägeketten und Sägeblättern bereitgestellt, das einen Grundrahmen, der oft auch einen Tisch trägt, einem Motor, der eine Schleifscheibe antreibt und einen Schwenkarm aufweist, an dem der Motor mit der Schleifscheibe derart schwenkbar angelenkt ist, dass er so gegen den zu schärfenden Zahn des Sägeblatts oder der Sägekette geschwenkt werden kann, dass dieser im korrekten Winkel und von der richtigen Seite her angeschliffen wird. Erfindungsgemäß sind an dem Grundrahmen gleichzeitig eine erste Aufspanneinrichtung zum Aufspannen einer zu schärfenden Sägekette und eine zweite Aufspannvorrichtung zum Aufspannen eines zu schärfenden Sägeblatts gleichzeitig befestigbar - in dem Sinne, dass regelmäßig beide Aufspannvorrichtungen an dem Schärfgerät betriebsbereit befestigt sind und es auch nicht etwa erforderlich ist, eine der Aufspannvorrichtungen ganz oder teilweise abzumontieren, um die andere benutzen zu können. Erfindungsgemäß ist der Schwenkarm derart einstellbar, dass der Motor in einer ersten Position zum Schleifen einer Sägekette schwenkbar festgesetzt werden kann und in einer zweiten, von der ersten Position unterschiedlichen Position zum Schleifen eines Sägeblatts schwenkbar festgesetzt werden kann. Hierdurch entfällt die bisherige Notwendigkeit, den zum Schärfen von Sägeblättern verwendeten Schwenkarm gegen einen anderen Schwenkarm austauschen zu müssen, wenn als nächstes ein Sägeblatt geschliffen werden soll und umgekehrt. Auch ist es nicht erforderlich, die Aufspannvorrichtung für das Sägeblatt ganz oder teilweise abzubauen und gegen eine Aufspannvorrichtung für eine Sägekette zu ersetzen, um eine solche anstatt eines Sägeblatts schärfen zu können. Stattdessen wird mit wenigen Handgriffen die Position des Schwenkarms umgestellt, um die Schwenkachse des Motors so zu verlagern, dass nach einem Sägeblatt sofort eine Sägekette geschärft werden kann und umgekehrt. Zusätzliche Anbauteile, die nur bedarfsweise an das Schärfgerät angebaut werden müssen, sind nicht erforderlich, um wahlweise Sägeketten und Sägeblätter schleifen zu können. Natürlich sind zusätzliche Anbauteile nicht ausgeschlossen, auch um andere Schneidmittel anschleifen zu können, wie z. B. Messerbalken von Heckenscheren oder Balkenmähern.

Vorzugsweise weist der Schwenkarm einen Verschiebemechanismus zum translatorischen Verschieben des gesamten Schwenkarms, oder eines Teils hiervon zwischen zwei unterschiedlichen, vorzugsweise konstruktiv definiert vorgegebenen Positionen relativ zum Grundrahmen auf.

Auf diese Art und Weise lässt sich das Verschieben des Schwenkarms besonders einfach verwirklichen.

Besonders zweckmäßig ist es, wenn der Verschiebemechanismus Positionierungshilfsmittel aufweist, die es erleichtern, den Schwenkarm, oder einen Teil hiervon in einer bestimmten Position festzusetzen, in der der Motor seine Position zum Schleifen der Sägekette, bzw. des Sägeblatts einnimmt. Auf diese Art und Weise entfällt das sonst erforderliche Messen, ob der Motor korrekt positioniert wurde.
Zweckmäßigerweise weist der Schwenkarm ein erstes Drehlager auf, das blockiert und gelöst werden kann und das es in gelöstem Zustand gestattet den Schwenkarm, oder einen Teil hiervon um eine erste, vorzugsweise vertikale Achse gegenüber dem Grundrahmen zu verdrehen. Das ermöglicht es, die unterschiedlichen Winkel einzustellen, unter denen Zähne von Sägeketten und von Sägeblättern anzuschleifen sind.

Im Idealfall weist der Schwenkarm ein zweites Drehlager auf, das blockiert und gelöst werden kann, wobei es das zweite Drehlager in gelöstem Zustand gestattet, den Schwenkarm, oder einen Teil hiervon um eine zweite, vorzugsweise im Wesentlichen horizontale Achse gegenüber dem Grundrahmen zu verdrehen. Auf diese Art und Weise lässt sich erforderlichenfalls insbesondere der Freiwinkel eines Zahns eines Sägeblatts abbilden - gerade Hartmetallzähne eines Sägeblatts weisen oft eine Zahnbrust auf, die nicht rein radial, sondern schräg zur Radiallinie verläuft.

Vorzugsweise sind die erste Aufspannvorrichtung und die zweite Aufspannvorrichtung so ausgestaltet, dass die gedachte Schwertebene einer zum Schleifen aufgespannten Kette parallel zu der Sägeblattebene eines gedachten zum Schleifen aufgespannten Sägeblatts verläuft. Auf diese Art und Weise stören sich die unterschiedlichen Aufspannvorrichtungen gegenseitig nicht und können daher jeweils dauerhaft am Schärfgerät montiert bleiben. Idealerweise ist dabei die Aufspannvorrichtung für das Sägeblatt so ausgelegt, dass das Sägeblatt beim Anschleifen im Wesentlichen vertikal ausgerichtet ist, also aufrecht "stehet".

Im Rahmen einer weiteren bevorzugten Ausführungsform ist vorgesehen, dass das Schärfgerät als Bestandteil der zweiten Aufspannvorrichtung eine translatorische Führung aufweist, entlang derer ein Sägeblattlagerschlitten verschoben werden kann, der das Sägeblatt um seine Betriebsachse drehbar in einer ansonsten definierten Position an dem Schärfgerät hält. Zweckmäßigerweise arbeitet mit dem Sägeblattlagerschlitten eine davon beabstandete Einrichtung zum drehfesten Festsetzen des Sägeblatts während des Anschleifens zusammen.

Idealerweise umfasst die translatorische Führung eine vorzugsweise im Wesentlichen in vertikaler Richtung von dem Maschinengestell abstehende Führungsschiene.

Bevorzugt ist, dass die Translationsführung einen entlang der Führungsschiene hin und her bewegbaren Schlitten umfasst, der vorzugsweise ein Schlittenrastorgan aufweist, welches in bevorzugten Positionen, die im Regelfall auf den Durchmesser gebräuchlicher Sägeblätter abgestimmt wird, mit einem komplementären Schlittenrastorgan der Führungsschiene verrastet.

Idealerweise sind an dem Kettenschienenhalter sowohl der Kettenindexierschlitten, als auch der Sägeblattindexierschlitten beweglich gelagert.

Vorzugsweise sind der Motor und die Schleifscheibe derart schwenkbar am Gestell gelagert, dass der Kettenindexierschlitten auf der einen Seite des Arbeitsbereichs der Schleifscheibe an dem Gestell befestigt ist und der Sägeblattindexierschlitten auf der gegenüberliegenden Seite des Arbeitsbereichs der Schleifscheibe, bezogen auf die Ebene, bzw. Ebenenschar, in der die Schleifscheibe umläuft. Auf diese Art und Weise wird der zur Verfügung stehende Bauraum gut ausgenutzt und die unterschiedlichen Anschlagschlitten behindern sich gegenseitig nicht.
Eine andere Weiterbildung des erfindungsgemäßen Schärfgeräts geht dahin, dass an dem Grundrahmen eine erste Aufspanneinrichtung zum Aufspannen einer zu schärfenden Sägekette und eine zweite Aufspannvorrichtung zum Aufspannen eines zu schärfenden Sägeblatts gleichzeitig befestigbar sind und dass der Schwenkarm mindestens ein erstes und ein zweites Drehlager besitzt, so dass der Schwenkarm - ohne ihn auszuwechseln - derart einstellbar ist, dass der Motor in einer ersten Position zum Schleifen einer Sägekette schwenkbar festgesetzt werden kann und in einer zweiten, von der ersten Position unterschiedlichen Position zum Schleifen eines Sägeblatts.

Selbstständiger Schutz wird beansprucht für eine Vorrichtung zum zentrischen Aufspannen von Sägeblättern mit unterschiedlichen Spanndurchmessern, vorzugsweise für ein Schärfgerät wie in dieser Beschreibung beschrieben, wobei die Vorrichtung zwei längs einer Achse zusammenschiebbare Sägeblatthaltebacken aufweist, die das jeweilige Sägeblatt zwischen sich zumindest im Wesentlichen spielfrei aufnehmen und eine längs der gleichen Achse in unterschiedlichen Positionen arretierbare Universal-Zentrierscheibe (47), die, je nachdem, in welcher Position sie arretiert wird, eine unterschiedliche Stufe bereitstellt, die zentrierend mit dem Sägeblatt in Eingriff kommt.

Weitere Ausgestaltungsmöglichkeiten, Wirkungsweisen und Vorteile ergeben sich aus der nachfolgenden Beschreibung eines Ausführungsbeispiels anhand der Figuren.
Die Figur 1 zeigt eine Seitenansicht des gesamten Schärfgeräts von seiner linken Seite her gesehen.
Die Figur 2 zeigt eine Gesamtansicht des Schärfgeräts von seiner rechten Seite her gesehen.
Die Figur 3 zeigt eine Nahaufnahme des erfindungsgemäßen Schärfgeräts von hinten-oben her gesehen.
Die Figur 4 zeigt eine Nahaufnahme des erfindungsgemäßen Schärfgeräts schräg von vorne her gesehen.
Die Figur 5 zeigt eine Nahaufnahme des erfindungsgemäßen Schärfgeräts von seiner rechten Seite her gesehen.
Die Figur 6 zeigt eine Nahaufnahme des erfindungsgemäßen Schärfgeräts von seiner linken Seite her gesehen.
Die Figur 7 zeigt eine Nahaufnahme des erfindungsgemäßen Schärfgeräts von unten her gesehen.
Die Figur 8 zeigt die Einzelheiten in Bezug auf das zentrierte Halten unterschiedlicher Sägeblätter am Sägeblattlagerschlitten.
Die Fig. 9 zeigt die schon in Fig. 8 gezeigte Universal-Zentrierscheibe in Seitenansicht, vom rückwärtigen Schlittenteil her gesehen.
Die Fig. 10 zeigt das Schärfgerät im Einsatz beim Schleifen einer Kette.
Die Fig. 11 zeigt das Schärfgerät im Einsatz beim Schleifen einer Kette.

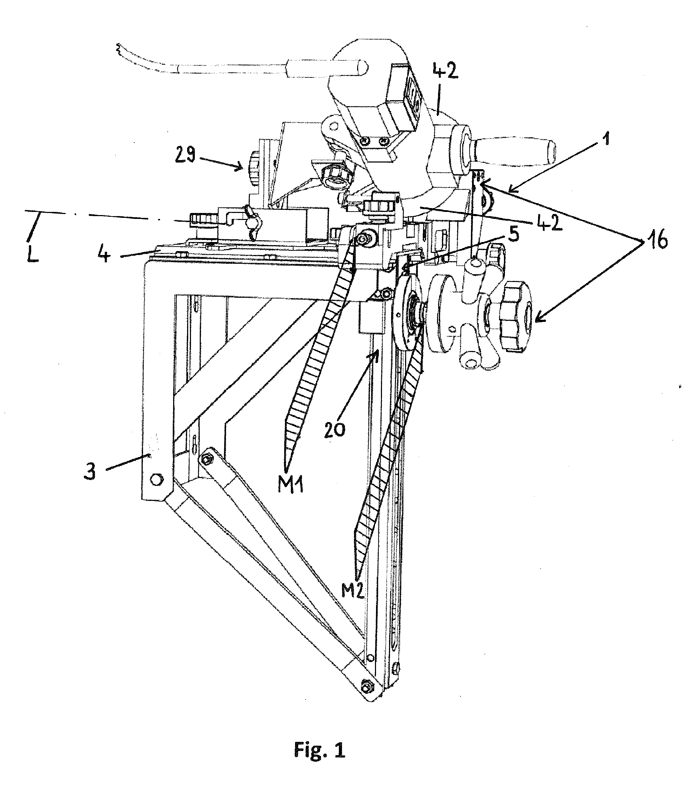

Einleitend wird auf die Fig. 1 verwiesen. Das Schärfgerät umfasst ein Gestell, welches seinerseits vorzugsweise aus einem Grundrahmen (3) und einer Tischplatte (4) besteht. Der Grundrahmen (3) ist hier als Wandhalterung zum Anschrauben an eine vertikale Wand ausgeführt, was eine bevorzugte Ausführungsform darstellt. Er kann stattdessen aber auch nach Art eines freistehenden Tisches ausgeführt werden. Im einfachsten Fall kann der Grundrahmen (3) auch ohne Füße ausgeführt sein und einfach aus einer Grundplatte bestehen, die an irgendeiner geeigneten Stelle aufgelegt wird und die als Basis dient, um alle Komponenten des Schärfgeräts in einer definierten Position zu halten und die zugleich körperlich und funktional mit der Tischplatte (4) zu einem einzigen Bauteil verschmilzt.

An dem Grundrahmen ist mit Hilfe eines gleich noch näher zu erläuternden Schwenkarms (29) ein Motor (41) mit einer Schleifscheibe (42) befestigt. Als Schwenkarm wird hier ein Arm bezeichnet, der von dem Grundrahmen absteht und der den Motor (41) und die von ihm angetriebene Schleifscheibe (42) so oberhalb der ersten, bzw. zweiten, gleich noch näher zu erläuternden Aufspannvorrichtung positioniert hält, dass durch Einschwenken der Einheit aus Motor (41) und Schleifscheibe (42) hin zu dem entsprechenden Zahn der Sägekette, oder des Sägeblatts das Anschleifen desselben erfolgt.

Das Schärfgerät (1) ist mit einer ersten Aufspannvorrichtung (5) ausgerüstet, die zum Aufspannen einer Sägekette dient, deren Kettenzähne geschliffen werden sollen. Gleichzeitig ist an dem Schärfgerät (1) eine zweite Aufspannvorrichtung (16) montiert, die zum Aufspannen eines Kreissägeblatts dient, dessen Zähne nachgeschliffen werden sollen.

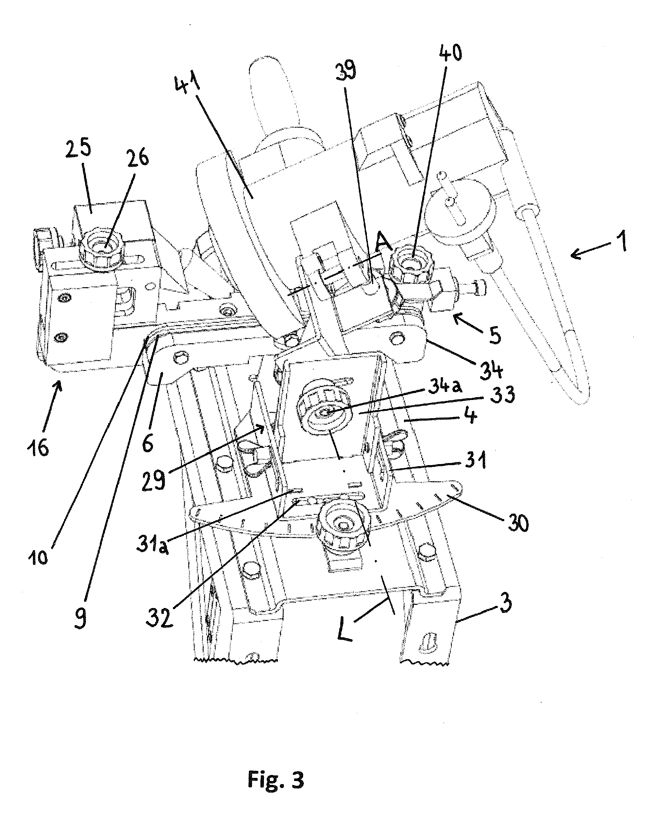

Wie man anhand der in Fig. 1 angedeuteten Ebenen sieht liegen die Mittelebenen M1 und M2 der ersten Aufspannvorrichtung (5) und der zweiten Aufspannvorrichtung (16) parallel nebeneinander. Die Mittelebene M1 entspricht dabei in Bezug auf die Kettenglieder, dessen Zähne gerade geschliffen werden sollen, der Ebene des Kettenschwerts, um das die Sägekette im bestimmungsgemäßen Sägebetrieb umläuft. Die Mittelebene M2 entspricht der Ebene, in der das Sägeblatt im Sägebetrieb umläuft. Beide besagten Ebenen verlaufen senkrecht zur Mittellängsachse L des Schärfgeräts, die am Besten in Fig. 3 erkennbar ist.

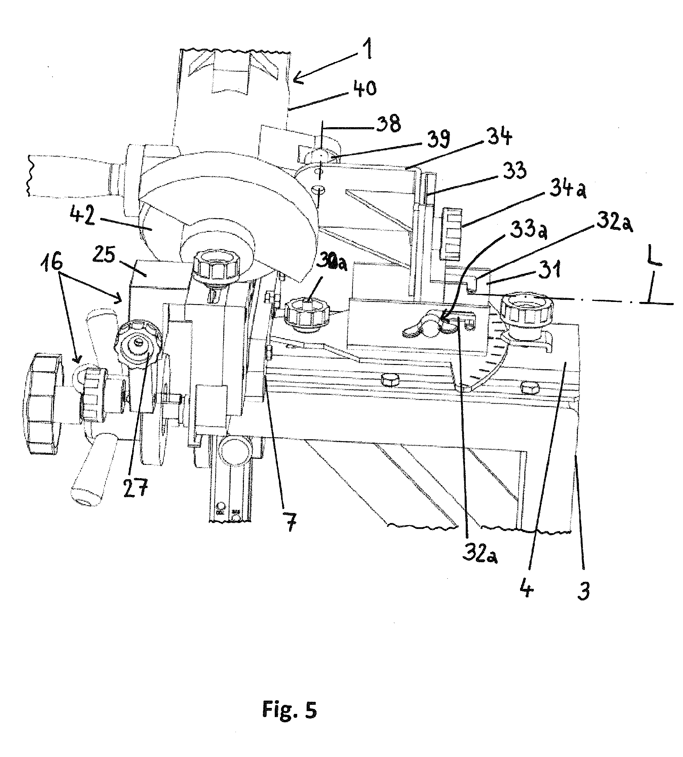

Wie der Schwenkarm (29) im Einzelnen aufgebaut ist ergibt sich am besten aus den Figuren 3 und 5.

Zum Schwenkarm (29) gehört im vorliegenden Ausführungsbeispiel vorzugsweise ein Führungsschuh (31), der seinerseits auf einer Drehscheibe (30) montiert ist, die ebenfalls einen Bestandteil des Schwenkarms bildet. Die Drehscheibe (30) bildet ein erstes Drehlager (30a) aus, das (wie man gut an Hand der Fig. 5 sieht) es hier gestattet, den gesamten Schwenkarm (29) um eine vertikale Achse zu schwenken, um auf diese Art und Weise den Winkel einzustellen mit dem die Zahnbrust des betreffenden Sägeketten- oder Sägeblattzahns angeschliffen wird.

Um die Zahnbrust eines Sägeblatts anzuschleifen, wird die Schleifscheibe mit Hilfe des Drehtellers im Regelfall so eingestellt, dass die Rotationsebene der Schleifscheibe im Wesentlichen senkrecht zur Rotationsebene des Sägeblatts ausgerichtet ist - manche Zahnbrüste weisen eine minimale Abschrägung auf.

Um die Zahnbrüste der Zähne einer Sägekette anzuschleifen, die im Regelfall wechselweise schräg verlaufen, wird die Schleifscheibe mit Hilfe der Drehscheibe (30) erst derart schräg gestellt, dass alle nach links angeschrägten Zahnbrüste angeschliffen werden können und dann gegensinnig so schräg gestellt, dass alle nach rechts angeschrägten Zahnbrüste angeschliffen werden können - oder umgekehrt.

Bei dem vorliegenden Ausführungsbeispiel ist die Drehscheibe (30) tatsächlich in Gestalt einer Scheibe ausgeführt, das ist wegen der guten Führungs- und Abstützeigenschaften einer solchen bevorzugt, muss aber nicht zwangsläufig so sein, so dass sich in den vorstehenden und nachfolgenden Schilderungen der Begriff "Drehscheibe" ggf. auch durch den allgemeinen Begriff "Drehlager" ersetzen lässt.

Wie man am besten an Hand der Fig. 3 sieht, ist der Führungsschuh (31) gegenüber der Drehscheibe (30) optional mit mindestens einem und vorzugsweise mehreren Langlöchern (32) ausgestattet, wobei jedes Langloch (32) zweckmäßigerweise mindestens einen Führungszapfen der Drehscheibe (30) aufnimmt. Auf diese Art und Weise kann der Führungsschuh (31) in Richtung seiner Langlöcher (32) und damit im Regelfall senkrecht zur Längsachse L des Schärfgeräts (1) definiert auf der Drehscheibe (30) hin und her verschoben werden. Um den Führungsschuh (31) unverrückbar auf der Drehscheibe (30) festzusetzten, sind in den Figuren nicht gezeigte Spannmittel vorhanden.

Der Führungsschuh (31) führt seinerseits einen Lagerarm (33), der ebenfalls Bestandteil des Schwenkarms (29) ist. Der Lagerarm (33) und der Führungsschuh sind über einen Verschiebemechanismus (33a) miteinander verbunden, dessen Komponenten man am besten erkennt, wenn man die Figuren 5 und 3 nebeneinander betrachtet. Die besagte Verbindung ist so gestaltet, dass der Lagerarm (33) gelöst, und ausgehend von einer ersten Position, in der er zusammen mit dem Rest des Schwenkarms (29) den Motor in korrekter Arbeitsposition relativ zur ersten Aufspannvorrichtung (5) hält, in Richtung parallel zur gedachten Längsachse L des Schärfgeräts in eine zweite Position verschoben und dort wieder festgesetzt werden kann, in der er zusammen mit dem Rest des Schwenkarms den Motor in korrekter Arbeitsposition relativ zur zweiten Aufspannvorrichtung (16) hält.

Wie am besten an Hand der Figuren 3 und 5 zu erkennen ist, werden der Verschiebemechanismus und die von ihm gebildete translatorische Führung bei diesem Ausführungsbeispiel dadurch verwirklicht, dass der Führungsschuh (31) eine U-förmige Gestalt hat. Seine Seitenwangen sind vorzugsweise so ausgestaltet, dass sie eine seitliche Führung des Lagerarms (33) bewirken. In seinen Seitenwangen, mit denen er idealerweise den Lagerarm (33) führt, besitzt der Führungsschuh jeweils ein weiteres Langloch (32a). Dieses Langloch (32a) hat vorzugsweise die Gestalt eines nach unten offenen C und wird von Klemmschrauben, vorzugsweise Flügel-oder Rändelschrauben, durchgriffen, die in ihrem angezogenen Zustand den Führungsschuh (31) und den Lagerarm (33) aneinander festsetzen. Die nach unten, in zum Gestell (2) zeigenden Enden des C geben die beiden Positionen vor, in denen der Lageram bestimmungsgemäß am Führungsschuh festzulegen ist. Sie stellen also ein Positionierungshilfsmittel dar, das dazu dient den Lagerarm als Teil des Schwenkarms in einer bestimmten Position festzusetzen, in der der Motor seine Position zum Schleifen der Sägekette, bzw. des Sägeblatts einnimmt.

Zugleich ist der Führungsschuh (31) an mindestens zwei in Richtung der Längsachse L voneinander beabstandeten Stellen mit vorzugsweise jeweils mindestens zwei Aussparungen (31a) versehen, während der Lagerarm (33) mit den Aussparungen (31a) korrespondierende Zapfen aufweist, die nur in Fig. 3 zu erahnen sind.

Wie man relativ gut anhand der Fig. 3 sehen kann, kann der Lagerarm (33) von einer definierten Position in eine andere definierte Position geschoben werden, indem die nicht näher bezeichneten Klemmschrauben, die den Lagerarm (33) am Führungsschuh (31) verspannen, gelöst werden und der Lagerarm (33) nach oben gehoben wird, so das der jeweilige Zapfen mit der oder den Aussparungen (31a) außer Eingriff kommt. Dann wird der Lagerarm (33) die beiden weiteren Langlöcher (32a) entlang verschoben, bis er seine neue Position erreicht hat. Dort wird der Lagerarm (33) abgesenkt. Vorzugsweise hierdurch werden seine Zapfen in die entsprechenden Aussparungen (31a) des Führungsschuhs (31) eingeführt und der Lagerarm (33) wird mit Hilfe der nicht näher bezeichneten Klemmschraube(n) wieder mit dem Führungsschuh (31) verspannt. Der Lagerarm ist nun sicher wieder festgelegt und kann auch unter dem Einfluss der beim Schleifen entstehenden Vibrationen große Drehmomentbelastungen abfangen, indem er einerseits formschlüssig mit Hilfe seiner Zapfen festgelegt ist und andererseits an davon beabstandeter Stelle durch den überwiegenden Reibschluss, den die Klemmschraube(n) erzeugen.

Auf diese Art und Weise können der Motor (41) und seine Schleifscheibe (42) mit Hilfe ein und desselben Schwenkarms (29) sowohl dazu dienen, um eine Sägekette mit Hilfe der ersten Aufspannvorrichtung (5) nachzuschleifen, als auch dazu, um ein Sägeblatt mit Hilfe der zweiten benachbart angeordneten Aufspannvorrichtung (16) nachzuschleifen, denn der Motor und seine Schleifscheibe können einfach und schnell in unterschiedlichen Arbeitspositionen festgesetzt werden, in denen sie entweder mit der Aufspannvorrichtung für die Kette oder alternativ mit der Aufspannvorrichtung für das Sägeblatt optimal zusammenarbeiten.

Dabei, so lässt sich zusammenfassend und mit allgemeiner, vom individuellen Ausführungsbeispiel losgelöster Bedeutung sagen, ist der Verschiebemechanismus vorzugsweise so gestaltet, dass er eine durch Formschluss (z. B. durch Zapfen und entsprechende Aussparungen (31a)) unterstützte Festlegung in jenen Positionen ermöglicht, die Arbeitspositionen der Einheit aus Motor und Schleifscheibe vorgeben.

Einen weiteren Teil des Schwenkarms (29) bildet der Lagerbock (34). Dieser ist vorzugsweise mittels eines zweiten Schwenklagers (34a) mit dem Lagerarm (33) verbunden - so, dass er gegenüber dem Lagerarm (33) gedreht werden kann und dann in der neuen Position wieder am Lagerarm (33) festgesetzt werden kann. Zu diesem Zweck ist eine nicht näher bezeichnete Klemmschraube vorgesehen, die den Lagerarm (33) und den Lagerbock (34) miteinander verbindet.

Besonders zweckmäßig ist es, wenn der Lagerarm (33) mindestens ein weiteres Langloch besitzt (vgl. insbes. Fig. 3), das es ermöglicht den Lagerbock (34) nicht nur gegenüber dem Lagerarm (33) zu verdrehen, sondern ihn auch noch translatorisch relativ zu dem Lagerarm (33) zu verlagern.

Der Lagerbock (34) bildet eine Achse A, die als Schwenkachse für den Motor fungiert, dessen Gehäuse ein entsprechendes Lagerauge trägt, welches vorzugsweise unter Zwischenfügung einer Rückholfeder (39) auf diese Lagerachse A aufgesetzt wird, sodass der Motor gegen die Wirkung der Rückholfeder geschwenkt werden kann, um so den eigentlichen Schärfvorgang auszuführen. Die Schwenkbewegung lässt sich mit Hilfe der in Fig. 3 gut zu erkennenden, aber nicht näher gekennzeichneten Anschlagsschraube individuell begrenzen, so dass der tragende Teil des individuellen Sägeblatts, oder der individuellen Sägekette beim Schleifen zuverlässig nicht angeschnitten wird.

Idealerweise sind die der Führungsschuh (31), der Lagerarm (33) und der Lagerbock (37), die hier den Schwenkarm (29) bilden, als Blechbiegeteile ausgeführt. Es kann aber auch vorteilhaft sein, sie als Metalldruckgussteile auszuführen. Im Übrigen kommt eventuell auch eine Ausgestaltung als normale Guss- oder Schmiedeteile in Frage, was aber nicht bevorzugt ist. Im Übrigen sei der Ordnung halber noch angemerkt, dass diese Teile auch funktional miteinander verschmelzen können, d. h. es ist nicht zwingend erforderlich den Schwenkarm aus insgesamt vier Einzelteilen aufzubauen, vielmehr können mehrere dieser Einzelteile auch zu einem gemeinsamen Teil verschmelzen. Der Aufbau aus den genannten vier Einzelteilen bietet allerdings den Vorteil, dass das Schärfgerät leicht herstellbar, sowie optimal einstellbar ist und ist deshalb besonders bevorzugt.

Insgesamt und verallgemeinernd ist festzuhalten, dass sich die erfindungsgemäße Ausführungsform vorzugsweise auch dadurch auszeichnet, dass das Schwenklager des die Schleifscheibe antreibenden Motors mittels des Schwenkarms rein translatorisch verschoben und zusätzlich als Ganzes um zwei unterschiedliche, idealerweise senkrecht zueinander stehende Achsen verdreht werden kann, so dass das Schwenklager genauso im Raum positioniert werden kann, wie es der aktuelle Bearbeitungsfall (Sägeblatt/Sägekette) erfordert.

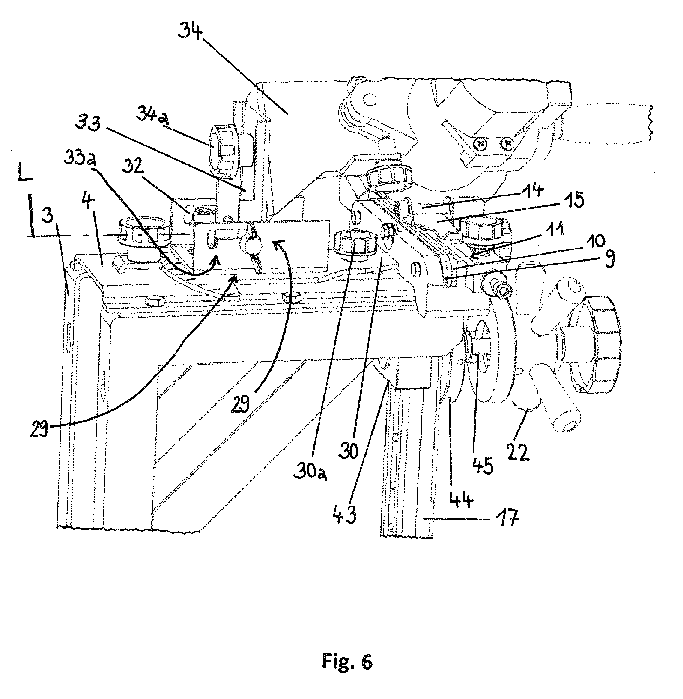

Die Figuren 3 und 6 lassen auch die erste Aufspannvorrichtung (5) sehr gut erkennen.

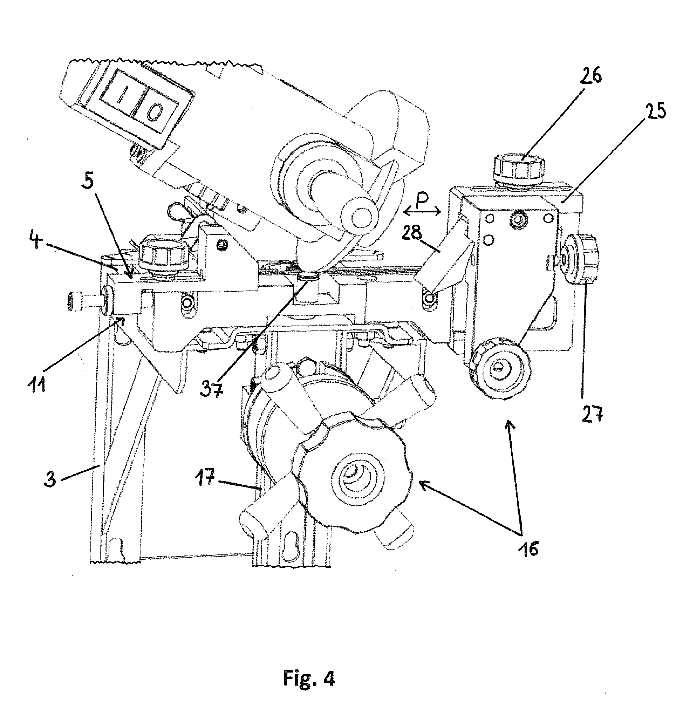

Diese besteht aus einem Kettenschienenhalter (6,) der an dem Grundrahmen befestigt ist, hier dadurch, dass er auf die Tischplatte (4) aufgeschraubt ist. Der Kettenschienenhalter nimmt vorzugsweise eine erste Kettenschiene (9) und eine zweite Kettenschiene (10) auf. Die beiden Kettenschienen bestehen im Normalfall jeweils aus einem ebenen Blech, welches so dimensioniert ist, dass es sich senkrecht zu seiner Längsachse elastisch verformen lässt. Die beiden Kettenschienen nehmen die Führungsfinnen der Treibglieder der Sägekette zwischen sich auf, mit denen die Treibglieder normalerweise in der Schiene geführt werden, die das Schwert der Kettensäge ausbildet. Wie man am besten anhand der Fig. 4 sieht, weist der Kettenschienenhalter vorzugsweise einen Lagerzapfen (37) für einen Klemm-Exzenter auf, mit dem seitlicher Druck auf eine der Kettenschienen aufgebracht werden kann, um auf diese Art und Weise die einzelnen Kettenglieder, die aktuell durch die beiden Kettenschienen geführt werden, zwischen den beiden Kettenschienen festzuklemmen und die Kette auf somit an der ersten Aufspannvorrichtung (5) festzusetzen. Die Fig. 4 zeigt allerdings lediglich den Lagerzapfen (37) und nicht den Exzenter als solchen.

Wie man sehr gut anhand der Figuren 4 und 6 sieht, läuft auf dem Kettenschienenhalter (6) auf einer Seite ein Kettenindexierschlitten (11). Der Kettenindexierschlitten (11) wird von einer ersten Klemmschraube durchgriffen, mit der er auf dem Kettenschienenhalter (6) festgesetzt werden kann. Diese erste Klemmschraube (12) durchgreift ein entsprechendes Langloch des Kettenindexierschlittens. Ist die erste Klemmschraube (12) gelöst, kann der Kettenindexierschlitten (11) mit Hilfe der ersten Einstellschraube (13) in Bezug auf seine Position justiert werden. Der Kettenindexierschlitten (11) ist mit einem vorzugsweise horizontal verlaufenden Kettenanschlagsstift (14) ausgestattet, auf dem ein Kettenanschlag (15) schwenkbeweglich gehalten ist. Der Kettenanschlag (15) ist vorzugsweise als ein Schwenkhebel ausgestattet, der so gelagert und ausgestattet ist, dass er aufschwenkt und die Blockade der Kette freigibt, wenn an der Kette in eine Richtung gezogen wird, um sie um ein Kettenglied weiter voran zubewegen, während er so gestaltet und gelagert ist, dass er das Verschieben der Kette in die Gegenrichtung verhindert. Auf diese Art und Weise kann der Kettenanschlag (15) dazu benutzt werden, um nach dem Schleifen jedes Kettengliedes die Kette mühelos genau um ein Kettenglied weiter zubewegen, das als nächstes geschliffen werden soll und um dieses Kettenglied exakt zu positionieren. Hierzu wird an der Kette gezogen, bis in etwa das nächste Kettenglied den Kettenanschlag passiert hat, vorzugsweise wird dann die Kette in die Gegenrichtung ein Stückweit zurückbewegt, solange bis der Kettenanschlag die weitere Zurückbewegung in der Kette verhindert. Jetzt ist das nächste Kettenglied in der richtigen Position um angeschliffen werden zu können.

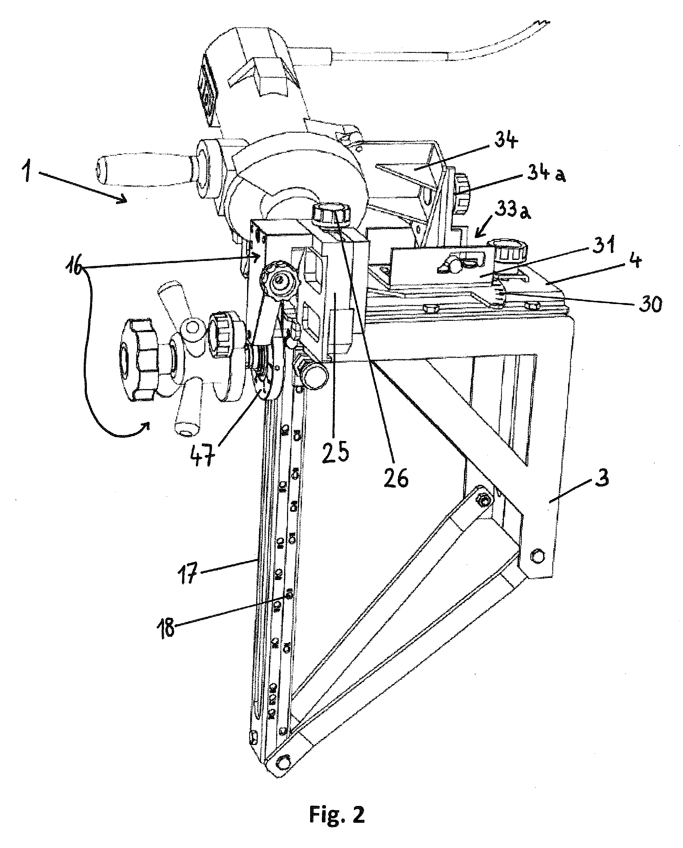

Die zweite Aufspannvorrichtung (16) lässt sich am besten anhand der Figuren 2 und 5, sowie anhand der Figur 4 erläutern.

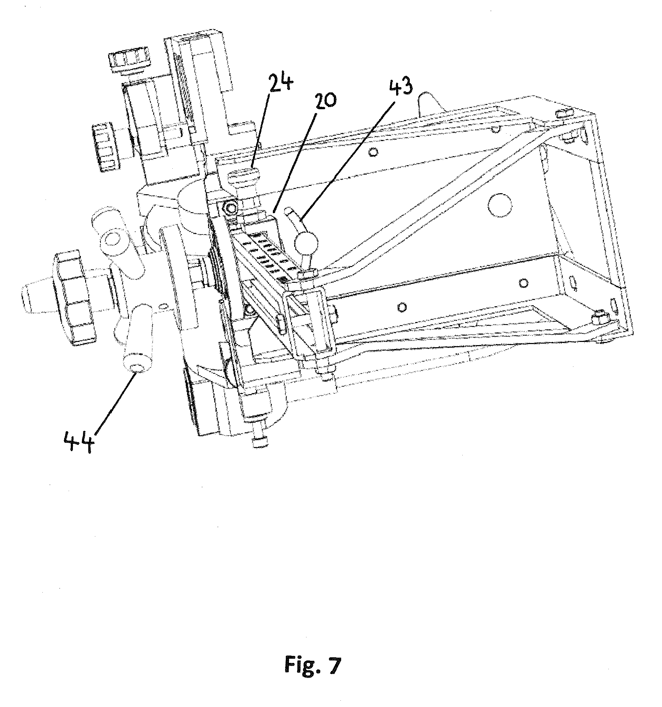

Die zweite Aufspannvorrichtung (16) umfasst eine Führungsschiene (17). Die Führungsschiene (17) ist vorzugsweise mit dem Gestell (2) verbunden. Die Führungsschiene (17) erstreckt sich in zumindest im Wesentlichen vertikaler Richtung nach unten. Die Führungsschiene (17) dient als Linearführung für einen Sägeblattlagerschlitten (20), vgl. Figuren 1 und 7. Der Sägeblattlagerschlitten (20) ist so ausgestattet, dass er das Sägeblatt drehbar in einer definierten Position festhält, deren Höhe in (vorzugsweise) vertikaler Richtung vom Durchmesser des zu schleifenden Sägeblatts abhängt.

Der Sägeblattlagerschlitten (20) besteht vorzugsweise aus einem rückwärtigen Schlittenteil (43) und einem vorderseitigen Schlittenteil (44). Gemeinsam umgreifen diese die Führungsschiene (17) so, dass sich eine translatorische Führung und idealerweise eine Linearführung ergibt. Der rückwärtige Schlittenteil (43) ist vorzugsweise nach Art eines großen E ausgeführt. Er besitzt einen Mittelzapfen, mit dem er die Führungsschiene (17) durchgreift, genauer gesagt ein Langloch der Führungsschiene (17). Er besitzt zwei seitliche Zapfen, mit denen er die Führungsschiene jeweils seitlich umgreift.

In einem dieser Zapfen ist ein Rastmechanismus (24) ausgebildet, der vorzugsweise aus einer Schraube oder einem federvorgespannten Stift besteht, dessen eines Ende in Rastöffnungen (18) an der Führungsschiene eingreift. Diese Rastöffnungen (18) markieren jeweils einen der typischen Sägeblattdurchmesser. Zu diesem Zweck ist eine entsprechende Beschriftung an den Rastöffnungen (18) angebracht. Auf diese Art und Weise kann der Benutzer den Sägeblattlagerschlitten (20) schnell so verstellen, wie er ihn zum Anschleifen des aktuellen Sägeblattes benötigt.

Der vorderseitige Schlittenteil (44) bildet eine vorzugsweise kreisförmige Sägeblatthaltebacke aus, die zur Anlage an dem Sägeblatt ausgebildet ist. Der vorderseitige Schlittenteil bildet im Regelfall zugleich einen Achskörper (45) aus, auf den eine weitere Sägeblatthaltebacke (21) aufgeschoben werden kann, die mit Hilfe einer Sägeblatthalteschraube (22), die hier als vierflügelige Mutter zum Handanzug ausgebildet ist, so gegenüber dem vorderseitigen Schlittenteil (44) so angezogen werden kann, das das Sägeblatt sicher und positionsgenau gehalten ist, ohne seine Drehbarkeit zu verlieren. Die Haltebacken legen sich also so an die Flanken des Sägeblatts an, dass dieses im Wesentlichen spielfrei zwischen ihnen gehalten wird, vorzugsweise ohne das Sägeblatt so stark zwischen sich einzuklemmen, dass es seine Drehbarkeit verliert.

Vorzugsweise ist der Achskörper (45) hohl und wird von einer Klemmschraube durchgriffen, mit deren Hilfe der Sägeblattlagerschlitten (20) in einer gewünschten Position auf der Führungsschiene (17) festgesetzt werden kann. Auf diese Art und Weise kann das zu schärfende Sägeblatt so an dem Schärfgerät (1) angebracht werden, dass es bei dessen bestimmungsgemäßer Aufstellung mit seiner Sägeblatthauptebene im Wesentlichen vertikal ausgerichtet ist.

Eine Besonderheit der erfindungsgemäßen Vorrichtung stellt der Mechanismus zur Zentrierung der unterschiedlichen Sägeblätter unter Berücksichtigung von deren unterschiedlichen Spanndurchmessern dar. Als Spanndurchmesser wird hier der Durchmesser der Öffnung bezeichnet, die ein Sägeblatt in seinem Zentrum besitzt und die es ermöglicht das Sägeblatt formschlüssig zwischen zwei Zentrierscheiben auf der Kreissägenwelle aufzunehmen. Typische Spanndurchmesser sind 20, 22 und 24 mm.

Theoretisch kann man das Aufspannen von Sägeblättern mit unterschiedlichen Spanndurchmessern dadurch bewältigen, dass man für das Schärfgerät je nach Bedarf unterschiedliche Zentrierscheiben verwendet.

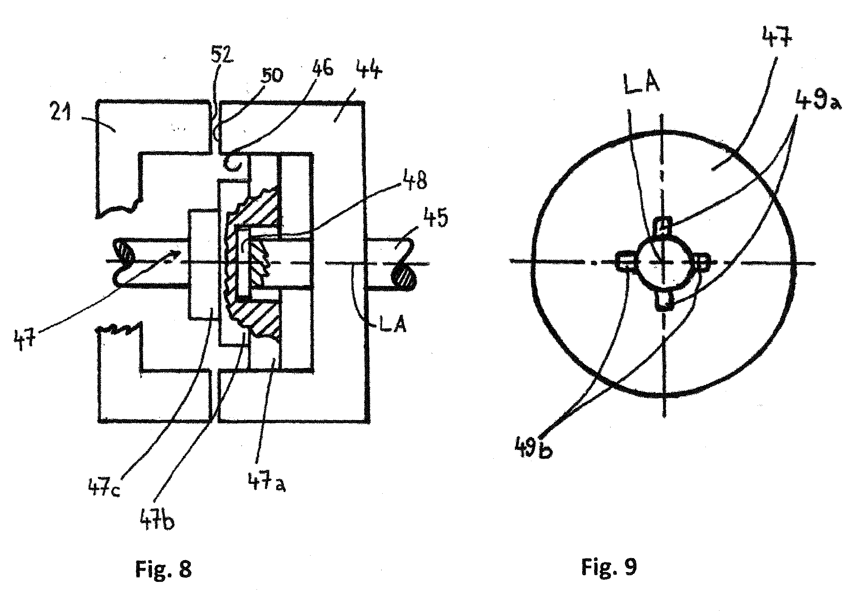

Bevorzugt wird jedoch eine Universal-Zentrierscheibe verwendet, die so aufgebaut ist, wie das die Fig. 8 zeigt.

Die Fig. 8 stellt, anders als die anderen Figuren, eine nicht maßstäbliche Prinzipskizze dar.

Gut zu erkennen ist das vorderseitige Schlittenteil (44), das von dem Achskörper (45) durchgriffen wird, der so ausgeführt wie oben beschrieben und hier nur angedeutet ist. Der vorderseitige Schlittenteil (44) weist eine vorzugsweise ringförmige Haltefläche (50) auf und wird dadurch zu einem von zwei Sägeblatthaltebacken. Er arbeitet mit einer komplementären Sägeblatthaltebacke (21) zusammen, die eine entsprechende Haltefläche (52) aufweist, wobei diese Haltebacke auch einfach eine ebene Scheibe sein kann. Diese Sägeblatthaltebacke (21) wird durch die in den Figuren vierflügelig dargestellte Sägeblatthalteschraube (22) gegen den vorderseitigen Schlittenteil (44) gepresst, so dass die Halteflächen (50) und (52) das nicht gezeigte Sägeblatt zwischen sich sanft einklemmen oder zumindest im Wesentlichen spielfrei zwischen sich halten, so dass es ohne einen allzu großen Widerstand entgegenzusetzen gedreht werden kann.

Der vorderseitige Schlittenteil (44) weist darüber hinaus auch eine Zentrierscheibenaufnahme (46) auf. Die eigentliche Universal-Zentrierscheibe (47) ist auf ihrer einen Stirnseite als Stufenscheibe ausgebildet, deren Stufen (47a), (47b) und (47c) den unterschiedlichen Spanndurchmessern der gängigen Sägeblätter entsprechen. Der Achskörper ist mit einem Querstift (48) oder (wenn er innen hohl ist) mit entsprechenden Querfortsätzen versehen, der, bzw. die einen Anschlag für die der gestuften Stirnseite abgewandte Stirnseite der Universal-Zentrierscheibe bilden. Das Besondere dabei ist, dass diese Stirnseite mit unterschiedlich tief ausgeführten Aufnahmen (49a) und (49b) ausgestattet ist. Die hier verwendeten Aufnahmen (49b) besitzen in Richtung der der Längsachse LA die maximale Tiefe, weshalb die Universal-Zentrierscheibe (47) so weit in die Zentrierscheibenaufnahme (46) des vorderseitigen Schlittenteils (44) eingeschoben werden kann, dass ihre kleinste Stufe (47c) wirksam wird. Die anderen Aufnahmen (49a) sind in Richtung der Längsachse weniger tief, so dass die mittlere Stufe (47b) der Universal-Zentrierscheibe (47) wirksam wird, wenn der Stift (48) in diese Aufnahmen (49a) eingelegt wird. Hingegen wird die größte Stufe (47a) wirksam, wenn der Stift (48) weder in die Aufnahmen (47a), noch in die Aufnahmen (47b) eingelegt wird, sondern gegen einen vorzugsweise unvertieften Bereich der Stirnseite der Universal-Zentrierscheibe (47) zur Anlage kommt.

Selbstverständlich ist diese Konstruktion nicht auf drei Stufen 47 a bis c und zwei Vertiefungen 49 a und b beschränkt, sondern es können dementsprechend auch mehr oder weniger Stufen und Vertiefungen vorgesehen werden.

Einen weiteren Bestandteil der zweiten Aufspannvorrichtung (16) bildet der Sägeblattindexierschlitten (25) der am besten anhand der Figuren 3, 4 und 5 zu erkennen ist.

Der Sägeblattindexierschlitten (25) ist vorzugsweise an dem Kettenschienenhalter (6) gelagert. Zu diesem Zweck besitzt der Sägeblattindexierschlitten (25) zweckmäßigerweise eine dritte Klemmschraube und ein Langloch, das von dieser Klemmschraube durchgriffen wird. Nach dem Lösen der dritten Klemmschraube (26) kann der Sägeblattindexierschlitten in Richtung parallel zu dem Pfeil P (vergleiche Fig. 4) verschoben werden. Der Sägeblattindexierschlitten (25) besitzt einen Abschnitt, der eine Art Zange ausbildet, in die das Sägeblatt bei bestimmungsgemäßer Montage hineinragt. Dies ist am besten anhand der Fig. 5 zu erkennen. Die Zange hat den Zweck, dass das Sägeblatt mit Hilfe einer weiteren Klemmschraube in dem Sägeblattindexierschlitten festgeklemmt und dadurch seiner Drehbarkeit beraubt werden kann. Auf diese Art und Weise wird verhindert, dass das Sägeblatt während der Schleifoperation ausweicht.

Darüber hinaus weist der Sägeblattindexierschlitten (25) eine zweite Einstellschraube (27) auf. Diese wirkt ausweislich der Fig. 4 auf den Sägeblattanschlag (28) ein, der schwenkbar um eine vorzugsweise horizontale Achse an den Sägeblattindexierschlitten (25) gehalten ist.

Der Sägeblattanschlag (28) funktioniert ähnlich, wie der bereits zuvor geschilderte Kettenanschlag (15). Auch der Sägeblattanschlag (28) ist nach Art eines Schwenkhebels ausgebildet, der aufschwenkt und das Sägeblatt passieren lässt, wenn dieses in eine Richtung gedreht wird, in der der Schärfvorrichtung ein bisher noch nicht geschliffener Zahn zugeführt wird. Umgekehrt schwenkt der Schwenkhebel, der hier den Sägeblattanschlag (28) bildet, zu und verhindert eine weitere Drehung, wenn das Sägeblatt in umgekehrter Richtung gedreht wird. Die Vorgehensweise ist also hier dieselbe, wie zuvor schon geschildert. Das Sägeblatt wird entgegen dem Uhrzeigersinn gedreht, um einen neuen Zahn in den Bereich der Schleifscheibe zu bringen. Dies lässt der Sägeblattanschlag zu. Dann wird das Sägeblatt ein Stückweit in Gegenrichtung gedreht, bis der Sägeblattanschlag (28) die weitere Drehung verhindert. Der neu anzuschleifende Zahn ist dann korrekt ausgerichtet und die Schleifoperation kann begonnen werden.

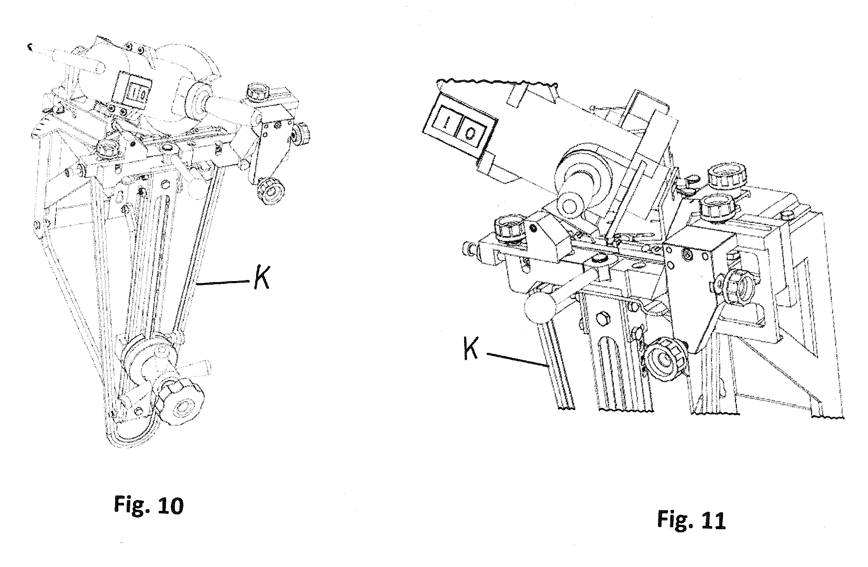

Die Figuren 10 und 11 zeigen das Schärfgerät im Einsatz beim Schleifen einer Kette (K). Gut zu erkennen ist, wie die Kette zwischen der ersten und zweiten Kettenschiene (9), bzw. (10) unter der Schleifscheibe in Position gehalten wird. Hier ist nun auch der Exzenterhebel zu erkennen, der drehbar um den Lagerbolzen (37) gehalten ist, und in seiner geschlossenen Position die Kettenschienen (9) und (10) zusammenpresst, so dass die Kette von den Kettenführungsschienen im Bereich ihrer Führungsfinnen eingeklemmt und immobilisiert wird. Gut zu erkennen ist auch wie der Kettenanschlag (15) in einen der Zwischenräume zwischen zwei Kettengliedern eingefallen ist und so eine genau indexierte Position der Kette vorgibt.

### Bezugszeichenliste

- 1: Schärfgerät
- 2: (nicht vergeben)
- 3: Grundrahmen
- 4: Tischplatte
- 5: Erste Aufspannvorrichtung
- 6: Kettenschienenhalter
- 7: (nicht vergeben)
- 8: (nicht vergeben)
- 9: Erste Kettenschiene
- 10: Zweite Kettenschiene
- 11: Kettenindexierschlitten
- 12: Erste Klemmschraube
- 13: Erste Einstellschraube
- 14: Kettenanschlagstift
- 15: Kettenanschlag
- 16: Zweite Aufspannvorrichtung
- 17: Führungsschiene
- 18: Rastöffnung
- 19: Maßstab
- 20: Sägeblattlagerschlitten
- 21: Sägeblatthaltebacke
- 22: Sägeblatthalteschraube
- 23: Zweite Klemmschraube
- 24: Rastmechanismus
- 25: Sägeblattindexierschlitten
- 26: Dritte Klemmschraube
- 27: Zweite Einstellschraube
- 28: Sägeblattanschlag
- 29: Schwenkarm
- 30: Drehscheibe
- 30a: erstes Drehlager
- 31: Führungsschuh
- 31a: Aussparung
- 32: Langloch im Führungsschuh
- 33: Lagerarm
- 33a: Verschiebemechanismus
- 34: Lagerbock
- 34a: zweites Drehlager
- 35: (nicht vergeben)
- 36: Langloch im Lagerarm
- 37: Lagerbock
- 38: Motorschwenkachse
- 39: Motorrückholfeder
- 40: Motoranschlagschraube
- 41: Motor
- 42: Schleifscheibe
- 43: Rückwärtiges Schlittenteil
- 44: Vorderseitiges Schlittenteil
- 45: Achskörper
- 46: Zentrierscheibenaufnahme
- 47: Universal-Zentrierscheibe
- 47a: erste Stufe (der Zentrierscheibe 47)
- 47b: erste Stufe (der Zentrierscheibe 47)
- 47b: erste Stufe (der Zentrierscheibe 47)
- 48: Querstift oder stiftartige Querfortsätze bei innen hohler Achse
- 49a: erste Vertiefungen zur Aufnahme des Querstifts
- 49b: zweite Vertiefungen zur Aufnahme des Querstifts

- L: Mittellängsachse des Schärfgeräts
- LA: Lagerachse für die Lagerung des anzuschleifenden Sägeblatts
- K: zu schärfende Kette

## Patentansprüche

1. Schärfgerät (1) zum Schärfen von Sägeketten und Sägeblättern mit einem Grundrahmen (3), einem Motor (41), der eine Schleifscheibe (42) antreibt und einem Schwenkarm (29), an dem der Motor mit der Schleifscheibe schwenkbar angelenkt ist, **dadurch gekennzeichnet, dass** an dem Grundrahmen (3) eine erste Aufspanneinrichtung (5) zum Aufspannen einer zu schärfenden Sägekette und eine zweite Aufspannvorrichtung (16) zum Aufspannen eines zu schärfenden Sägeblatts gleichzeitig befestigbar sind und dass der Schwenkarm - ohne ihn auszuwechseln - derart einstellbar ist, dass der Motor in einer ersten Position zum Schleifen einer Sägekette schwenkbar festgesetzt werden kann und in einer zweiten, von der ersten Position unterschiedlichen Position zum Schleifen eines Sägeblatts.

2. Schärfgerät (1) nach Anspruch 1, **dadurch gekennzeichnet, dass** der Schwenkarm (29) einen Verschiebemechanismus zum translatorischen Verschieben des gesamten Schwenkarms (29) oder eines Teils hiervon zwischen zwei unterschiedlichen Positionen relativ zum Grundrahmen (3) aufweist.

3. Schärfgerät (1) nach einem der vorhergehenden Ansprüche, **dadurch gekennzeichnet, dass** der Verschiebemechanismus Positionierungshilfsmittel aufweist, die es erleichtern, den Schwenkarm (29), oder einen Teil hiervon in einer bestimmten Position festzusetzen, in der der Motor (41) seine Position zum Schleifen der Sägekette, bzw. des Sägeblatts einnimmt.

4. Schärfgerät (1) nach einem der vorhergehenden Ansprüche, **dadurch gekennzeichnet, dass** der Schwenkarm (29) ein erstes Drehlager (30a) aufweist, das blockiert und gelöst werden kann, und das es in gelöstem Zustand gestattet, den Schwenkarm, oder einen Teil hiervon um eine erste, vorzugsweise vertikale Achse gegenüber dem Grundrahmen (3) zu verdrehen.

5. Schärfgerät (1) nach einem der vorhergehenden Ansprüche, **dadurch gekennzeichnet, dass** der Schwenkarm (29) ein zweites Drehlager (34a) aufweist, das blockiert und gelöst werden kann, und es in gelöstem Zustand gestattet, den Schwenkarm (29) oder einen Teil hiervon um eine zweite, vorzugsweise im Wesentlichen horizontale Achse gegenüber dem Grundrahmen zu verdrehen.

6. Schärfgerät (1) nach einem der vorhergehenden Ansprüche, **dadurch gekennzeichnet, dass** die erste Aufspannvorrichtung (5) und die zweite Aufspannvorrichtung (16) so gestaltet sind, dass die gedachte Schwertebene (M1) einer zum Schleifen aufgespannten Kette parallel zu der Sägeblattebene (M2) eines gedacht zum Schleifen aufgespannten Sägeblatts verläuft;

7. Schärfgerät (1) nach Anspruch 1, **dadurch gekennzeichnet, dass** das Schärfgerät (1) als Bestandteil der zweiten Aufspannvorrichtung (16) eine translatorische Führung (33a) aufweist, entlang derer ein Sägeblattlagerschlitten (20) verschoben werden kann, der das Sägeblatt um seine Betriebsachse drehbar in einer ansonsten definierten Position an dem Schärfgerät hält.

8. Schärfgerät (1) nach einem der vorhergehenden Ansprüche, **dadurch gekennzeichnet, dass** die translatorische Führung eine vorzugsweise im Wesentlichen in vertikaler Richtung von dem Maschinengestell abstehende Führungsschiene umfasst (17).

9. Schärfgerät (1) nach einem der vorgehenden Ansprüche, **dadurch gekennzeichnet, dass** die Translationsführung einen entlang der Führungsschiene (17) hin und her bewegbaren Sägeblattlagerschlitten (20) umfasst, der vorzugsweise einen Rastmechanismus (24) aufweist, welcher in bevorzugten Positionen, die auf den Durchmesser gebräuchlicher Sägeblätter abgestimmt sind, mit einem komplementären Schlittenrastorgan vorzugsweise in Gestalt einer Rastöffnung (18) der Führungsschiene (17) verrastet;

11. Schärfgerät (1) nach einem der vorhergehenden Ansprüche, **dadurch gekennzeichnet, dass** an dem Kettenschienenhalter (6) sowohl der Kettenindexierschlitten (11), als auch der Sägeblattindexierschlitten (25) beweglich verstellbar gelagert sind;

13. Schärfgerät (1) nach einem der vorhergehenden Ansprüche, **dadurch gekennzeichnet, dass** der Motor (41) und die Schleifscheibe (42) derart schwenkbar gegenüber dem Grundrahmen (3) gelagert sind, dass der Kettenindexierschlitten (11) auf der einen Seite des Arbeitsbereichs der Schleifscheibe (42) gegenüber dem Grundrahmen (3) befestigt ist und der Sägeblattindexierschlitten (25) auf der gegenüberliegenden Seite des Arbeitsbereichs der Schleifscheibe (42).

14. Schärfgerät (1) nach Anspruch 1 oder 2, **dadurch gekennzeichnet, dass** an dem Grundrahmen (3) eine erste Aufspanneinrichtung (5) zum Aufspannen einer zu schärfenden Sägekette und eine zweite Aufspannvorrichtung (16) zum Aufspannen eines zu schärfenden Sägeblatts gleichzeitig und ohne dass sie sich gegenseitig behindern, befestigbar sind und dass der Schwenkarm (29) mindestens ein erstes und ein zweites Drehlager (30a, 34a) besitzt, so dass der Schwenkarm (29) - ohne ihn auszuwechseln - derart einstellbar ist, dass Motor (41) in einer ersten Position zum Schleifen einer Sägekette schwenkbar festgesetzt werden kann und in einer zweiten, von der ersten Position unterschiedlichen Position zum Schleifen eines Sägeblatts.

16. Vorrichtung zum zentrischen Aufspannen von Sägeblättern mit unterschiedlichen Spanndurchmessern, vorzugsweise für ein Schärfgerät nach einem der vorhergehenden Ansprüche, **dadurch gekennzeichnet, dass** die Vorrichtung zwei längs einer Achse (LA) zusammenpressbare Sägeblatthaltebacken (21) aufweist, die das jeweilige Sägeblatt zwischen sich einspannen und eine längs der gleichen Achse LA in unterschiedlichen Positionen arretierbare Universal-Zentrierscheibe (47), die, je nachdem, in welcher Position sie arretiert wird, eine unterschiedliche Stufe (47a, 47b, 47c) bereitstellt, die zentrierend mit dem Sägeblatt in Eingriff kommt, wobei die Sägeblatthaltebacken das Sägeblatt vorzugsweise zumindest im Wesentlichen spielfrei zwischen sich aufnehmen und vorzugsweise ohne es seiner Drehbarkeit zu berauben.
